# FASCICULE DE BREVET EUROPEEN

(11) **EP 4 703 773 B1**
(45) Date de publication et mention de la délivrance du brevet: **16.09.2026**
(21) Numéro de dépôt: 25198869.7
(22) Date de dépôt: 28.08.2025
(51) Int. Cl.: G01V 3/10, G01V 3/15, G01V 3/165

(54) **DÉTECTEUR DE MÉTAUX ET MODULE BATTERIE DÉPORTÉ DANS LA CANNE**
METALLDETEKTOR UND IN DER RINNE ENTFERNTES BATTERIEMODUL
METAL DETECTOR AND BATTERY MODULE OFFSET IN THE CANE

(30) Priorité: 30.08.2024 FR 2409264
(43) Date de publication de la demande: 04.03.2026
(73) Titulaire: Xplorer, 31320 Mervilla (FR)
(72) Inventeur: DUBOS, Loic, 31280 MONS (FR); FALCOU, Serge, 31290 MONTCLAR-LAURAGAIS (FR)
(74) Mandataire: BARRE LAFORGUE

(56) Documents cités:
- CN-U- 220 983 523
- US-A1- 2018 252 835
- US-A1- 2022 283 332

## Description

### [Domaine technique]

L'invention concerne un détecteur de métaux qui comprend un module batterie déporté dans la canne et configuré pour alimenter notamment la ou les bobines du détecteur disposées dans un disque de détection. En particulier, l'invention peut se rapporter à un détecteur de métaux portatif pour le loisir, l'archéologie, le militaire. Le détecteur de métaux portatif peut être notamment qualifié de détecteur de métaux à balayage ou à mouvement, son disque de détection électromagnétique permettant la recherche de cibles dans le sol.

### [État de la technique antérieure]

Les détecteurs de métaux sont conçus pour localiser et identifier la présence de métaux enfouis ou dissimulés dans divers substrats tels que les sols terreux, sablonneux etc. Les détecteurs de métaux sont utilisés dans plusieurs types d'application qui peuvent concerner la sécurité, le loisir, l'industrie, l'archéologie.

En général, un détecteur de métaux comprend un disque de détection électromagnétique aussi appelé tête de détection. Le disque de détection est disposé à l'extrémité d'une canne qui porte à son extrémité supérieure une poignée et un boitier de commande. La canne peut être constituée d'un bras comprenant deux tronçons qui s'emboitent l'un dans l'autre pour fournir une canne télescopique, on peut alors parler de bas de canne et de haut de canne. Le bas de canne portant le disque détection tandis que le haut de canne est relié à la poignée du détecteur de métaux. Le boitier de commande est configuré pour piloter le disque de détection qui comprend au moins une bobine électromagnétique. Cette dernière est configurée pour générer un champ électromagnétique qui interagit avec des objets métalliques enfouis dans un substrat tel que le sol. Le champ électromagnétique induit des courants électriques dans ces objets métalliques qui produisent alors un signal détectable par la bobine de Les documents US 2018252835, CN 220983523 et US 2022283332 décrivent des détecteurs de métaux portatifs comprenant un disque de détection, une canne, une batterie et un câble de puissance.

La plupart des détecteurs de métaux comportent une électronique de traitement du signal capté par la bobine qui est traditionnellement associée au boitier de commande ou au disque de détection. L'électronique de traitement traite les signaux captés par la bobine et les relaye à l'utilisateur en produisant des signaux sonores ou visuels. Les détecteurs de métaux sont également équipés d'une électronique de puissance qui comprend notamment des moyens d'excitation de la bobine émettrice et d'une batterie qui sont généralement embarquées à l'intérieur ou à proximité du boitier de commande au niveau du manche du détecteur de métaux ou encore dans le disque de détection lui-même. Le courant d'excitation de la bobine émettrice et les signaux électriques mesurés par cette dernière ou par la bobine réceptrice sont alors transmis, de manière filaire, par un câble de puissance qui s'étend entre le disque de détection et la poignée où sont logées l'électronique de puissance, l'électronique de traitement et la bobine électromagnétique.

La communication filaire entre la bobine et l'électronique de puissance et notamment les moyens d'excitation qui sont disposés, ici, dans le boitier de commande à distance de la bobine produit une impédance électrique qui nécessite de fournir un courant électrique de tension élevée afin d'alimenter la bobine électromagnétique. En effet, la résistance d'un fil est proportionnelle à sa longueur et inversement proportionnelle à son diamètre. Ainsi, un fil électrique long et de petit diamètre produit une grande résistance qui dégrade le rendement d'alimentation de la bobine électromagnétique par effet joule et nécessite l'emploi d'une batterie de plus grande capacité.

Pour améliorer le rendement d'alimentation de la bobine, le document EP 2 910 979 décrit un détecteur de métaux dont le disque de détection embarque, en plus de la bobine électromagnétique, l'électronique de puissance dont notamment les moyens d'excitation de la bobine, l'électronique de traitement du signal, la batterie d'alimentation, mais aussi un émetteur/récepteur sans fil. L'émetteur/récepteur sans fil est configuré pour dialoguer avec un émetteur/récepteur sans fil compatible et embarqué dans le boitier de commande. La communication sans fil avec l'unité de contrôle du disque permet au boitier de commande de piloter le disque et de recevoir le signal capté par le disque. La position des moyens d'excitation placés à proximité de la bobine émettrice permet ainsi de limiter les pertes par effet joules qu'auraient notamment engendré un cordon de déport.

Le document US 10,809,411 décrit un détecteur de métaux qui comprend l'électronique de puissance dont les moyens d'excitation de la bobine émettrice mais aussi la batterie et l'électronique de traitement sont disposés dans un logement situé dans la canne du détecteur qui porte le disque de détection. Le détecteur de métaux comporte, en outre, un câble de puissance qui s'étend dans la canne et relie la batterie à la bobine émettrice. Classiquement ce câble de puissance comprend une spirale élastique afin de donner une élasticité au câble en fonction de la longueur de la canne mais aussi pour les opérations de maintenance : démontage du disque ou de la batterie. Ce logement comporte également une unité de contrôle qui est configurée pour piloter l'électronique de puissance et l'électronique de traitement. L'unité de contrôle comporte, en sus, un émetteur/récepteur sans fil configuré pour dialoguer avec un émetteur/récepteur sans fil intégré au boitier de commande qui se situe à proximité de la poignée ou peut être déporté à la convenance de l'utilisateur, par exemple, dans un sac-à-dos.

Cette configuration permet d'augmenter la capacité de la batterie sans pour autant perturber le signal capté par la bobine car la batterie est disposée dans la canne. Toutefois, dans ce document, le câble de puissance est relié au logement batterie par le bas du logement qui se trouve dans la canne. Cet agencement implique de fournir un câble avec une spirale de plus grandes dimensions pour permettre l'extraction du logement batterie. Le câble de puissance est donc rallongé de manière non négligeable pour permettre la maintenance du détecteur de métaux. Par exemple, pour un logement qui mesure 20 cm de long, il faut prévoir une spirale de dimensions plus longues qui mesure entre 25 et 30 cm car une spirale ne se déplie jamais totalement. Or, comme nous l'avons expliqué précédemment plus le fil qui relie la batterie à la bobine émettrice est long plus le rendement d'alimentation de la batterie est dégradé.

Dans ce document, le câble de puissance est relié à la batterie au travers d'un connecteur à visser ou à baïonnette. Les dimensions de la section transversale de ce connecteur intégré au bas de canne sont limitées par le diamètre du tube du bas canne. Ceci impose l'utilisation d'un connecteur de petit diamètre, fragile et délicat à manipuler. Ainsi, augmenter le diamètre du connecteur nécessiterait d'augmenter le diamètre du bas de canne, ce qui va à l'encontre de l'objectif de minimiser le poids, un critère prépondérant dans la conception d'un détecteur de métaux.

Ainsi, l'encombrement que prend le système de verrouillage à visser ou à baïonnette est au détriment de l'espace disponible pour le nombre de broches de connexion et limite la taille du joint d'étanchéité. Assurer l'étanchéité devient donc difficile, car un joint de petite taille, qui plus est généralement situé au fond du connecteur, est compliqué à contrôler, à nettoyer ou à remplacer, ce qui entraine des pannes fréquentes. Cela nécessite, en outre, serrage suffisant pour obtenir l'étanchéité de la connexion, le serrage est alors soumis à la minutie de l'utilisateur. Le serrage peut aussi se relâcher lorsqu'il est soumis à des vibrations, ou des mouvements du câble.

De plus, la connexion du câble de puissance par le bas du logement pose également un problème lors de l'entretien du détecteur de métaux. Lorsque le connecteur reliant le câble de puissance au logement est détaché de ce dernier, la force de rappel produit par la portion enroulée du câble de puissance va appliquer une traction sur le connecteur afin de le faire descendre dans le tube de la canne. L'utilisateur peut alors avoir besoin d'outils spécifiques pour aller récupérer le connecteur dans le tube de la canne.

En outre, l'utilisation d'un logement disposé dans la canne pour contenir la batterie qui alimente la bobine apporte des contraintes supplémentaires en termes de praticité d'utilisation du détecteur de métaux et notamment concernant le rechargement de la batterie. En particulier, le logement décrit par ce document nécessite de débrancher la batterie et de l'extraire du logement pour la recharger.

L'invention vise à pallier tout ou partie de ces inconvénients.

### [Exposé de l'invention]

L'invention vise à améliorer les détecteurs de métaux.

En particulier, dans des modes de réalisation, l'invention se rapporte à un détecteur de métaux portatif comprenant une canne portant un disque de détection équipé d'une ou plusieurs bobines, la canne comprend :
- un bras qui s'étendant selon un axe longitudinal A-A et comportant un logement délimité par une paroi interne ;
- un module batterie inséré dans le logement, le module batterie comportant un connecteur latéral, et
- un câble de puissance adapté à transmettre un courant électrique, le câble de puissance comprenant, d'une part, un premier bout qui comporte une tête de connexion complémentaire du connecteur latéral, et d'autre part, un second bout relié électriquement au disque de détection et adapté à fournir un courant sortant ;
la tête de connexion dudit câble étant placée au contact du connecteur latéral, le module batterie est ajusté aux dimensions du logement de sorte que la paroi interne du bras maintienne la tête de connexion au contact du connecteur latéral.

Le logement du module batterie est ainsi repensé de façon à permettre une connexion latérale du câble puissance au module batterie. Pour cela, l'invention utilise un câble de puissance équipé d'une tête de connexion plate qui coopère avec le connecteur latéral selon une interaction de type « plug-and-play ». La tête de connexion est maintenue assemblée au connecteur latéral entre le module batterie et la paroi du logement sans l'utilisation de moyens de verrouillage mécanique tels qu'un pas de vis, baïonnette etc. Cette conception mécanique permet de réduire le risque de débranchement de garantir l'étanchéité mais aussi d'améliorer l'industrialisation du connecteur : réduction des coûts, légèreté améliorée, réduction de l'encombrement etc. De plus, comme le module batterie est ajusté au logement des erreurs de manipulation peuvent être évitées : le module batterie peut être inséré dans le logement uniquement si la tête de connexion est correctement alignée sur le connecteur latéral. Si ce n'est pas le cas, la tête de connexion bute contre l'extrémité du logement interdisant ainsi l'insertion du module batterie dans ce dernier.

Avantageusement, le branchement latéral de la tête de connexion permet aussi de réduire le nombre de spirales du câble de puissance et d'améliorer le rendement d'alimentation de la bobine du détecteur de métaux. Le connecteur latéral peut être configuré pour délivrer un courant sortant depuis la batterie rechargeable située dans le logement vers le câble de puissance qui est, par ailleurs, relié directement ou indirectement à la bobine du disque de détection. En outre, la disposition latérale du connecteur latéral permet fournir un connecteur dont les dimensions de l'interface de connexion ne sont pas limitées par les dimensions de la section transversale du bras, il est donc possible d'agrandir l'interface de connexion entre le connecteur et la tête de connexion pour ajouter, par exemple, des broches supplémentaires. Il est notamment possible, de faire passer, en parallèle du courant d'alimentation, des données électroniques au travers du câble de puissance.

### [Module batterie]

Dans des modes de réalisation, le module batterie peut comporter un compartiment étanche qui s'étend selon l'axe longitudinal A-A et contient une batterie rechargeable. La batterie peut comprendre un ou plusieurs accumulateurs pour atteindre une capacité augmentée. L'étanchéité du compartiment de la batterie permet d'utiliser le détecteur de métaux dans des conditions aqueuses même extrêmes, par exemple, dans le cadre d'une recherche de métaux sous-marine. Le module batterie peut également comprendre des composants électroniques configurés pour moduler la valeur de la tension en sortie de la batterie. Les composants électroniques peuvent par exemple comprendre un convertisseur de tension. Le déport de ces composants électroniques dans le bras de la canne à distance du disque de détection permet de réduire les perturbations électromagnétiques que produisent ce type de composants électroniques et qui peuvent être détectées la ou les bobines réceptrices du disque de détection. La puissance de détection peut être ainsi augmentée sans dégrader la qualité des signaux détectés par la ou les bobines réceptrices.

Le module batterie peut être amovible de son logement, pour l'extraire du logement, le détecteur de métaux peut comprendre un élément d'extraction du module batterie, l'élément d'extraction étant, d'une part, couplé directement ou indirectement au module batterie, et d'autre part, saillant du logement du bras. L'élément d'extraction permet d'extraire le module batterie pour réaliser l'entretien de la canne et/ou remplacer la batterie, par exemple, lorsqu'elle est déchargée et que l'utilisateur dispose d'une seconde batterie chargée. L'élément d'extraction peut comporter une tirette qui est configurée pour être saillante du logement du bras, la tirette s'étend de préférence longitudinalement dans le prolongement de l'axe longitudinal A-A. La tirette constitue un moyen de préhension qui permet à l'utilisateur d'extraire facilement le module batterie.

Dans des modes de réalisation, le module batterie peut comporter des moyens de rechargement filaires ou sans fil de la batterie. Les moyens de rechargement permettent de recharger la batterie sans extraire le module batterie du bas de canne.

### [Connecteur extrémal]

Dans des modes de réalisation, les moyens de rechargement de la batterie peuvent comporter un connecteur extrémal qui est positionné à une extrémité du logement du bras, préférentiellement, le connecteur extrémal est saillant de l'extrémité du logement. En particulier, l'interface de connexion du connecteur extrémal peut s'étendre parallèlement ou selon l'axe longitudinal A-A. L'accessibilité du connecteur extrémal depuis l'extérieur du logement du bras permet de recharger la batterie sans l'extraire du logement et sans la débrancher du câble de puissance. Ceci permet aussi réduire la dimension du câble de puissance en fournissant une solution pour recharger la batterie sans l'extraire de son logement et donc sans devoir appliquer une traction sur le câble de puissance.

Le connecteur extrémal peut avantageusement être configuré pour transmettre un courant entrant depuis un câble d'alimentation relié à une source d'énergie vers à la batterie. La source d'énergie peut par exemple être une prise secteur reliée à un réseaux distribution électrique ou une batterie électrique mobile telle que la batterie d'un véhicule.

Dans des modes de réalisation, le module batterie peut comprendre, à une extrémité, un embout de connexion auquel est intégré le connecteur extrémal, l'embout de connexion est configuré pour être saillant du logement du bras. Le maintien de l'embout de connexion saillant du logement permet de recharger la batterie sans l'extraire de la canne. Ceci contribue également à permettre au fabricant de réduire les dimensions du câble de puissance. En particulier, le logement peut être disposé à une extrémité du bras, l'embout de connexion peut ainsi comprendre un épaulement configuré pour prendre appui sur au moins une portion des bords libres de ladite extrémité. L'épaulement peut avantageusement prendre appui sur, seulement, une portion des bords libres de ladite extrémité du bras de manière à laisser une ouverture vers le logement. Cette ouverture peut permettre le passage d'un élément d'extraction couplé au module batterie tel qu'une tirette qui permet d'extraire le module batterie de son logement.

Dans des modes de réalisation, le bras de la canne peut comporter un haut de canne et un bas de canne qui sont assemblés entre eux, le haut de canne étant couplé au manche du détecteur de métaux alors que le bas de canne est articulé au disque de détection. Selon cette configuration, le logement est disposé à l'extrémité du bas de canne qui fait la jonction avec le haut de canne. L'épaulement peut alors prendre appui sur les bords libres de l'extrémité du bras et s'intégrer dans le prolongement des parois externes du bras ce qui permet d'assurer un emboitement facile du bas de canne avec le haut de canne. Avantageusement, le bras peut aussi comporter un système de réglage de la longueur de la canne, par exemple, l'un des tronçons du bras comprend un crantage et l'autre portion des moyens de verrouillage tels qu'une bride d'assemblage.

Dans des modes de réalisation, l'embout de connexion peut comprendre des moyens d'assemblage à un raccord d'alimentation qui permet de transmettre au connecteur extrémal un courant électrique entrant. Il est à noter que le raccord d'alimentation peut être connecté à une source d'énergie électrique fixe (prise secteur) ou mobile (batterie de véhicule). Les moyens d'assemblage sont préférentiellement de type plug-and-play, c'est-à-dire, que l'embout de connexion peut être branché facilement à un raccord d'alimentation complémentaire, par exemple, par emboitement. Pour cela, les moyens d'assemblage peuvent comporter une extension comprenant une rainure de clippage. En particulier, l'extension peut être saillante de l'épaulement et comprendre une section transversale de dimensions réduites. L'embout de connexion est ainsi facilement accessible pour l'utilisateur. De plus, lorsque le logement est situé dans le bas de canne, les dimensions de l'embout de connexion ne compromettent pas l'assemblage du bas de canne avec un haut de canne complémentaire.

Les moyens d'assemblage peuvent aussi comporter des aimants permettant un assemblage, avec un raccord d'alimentation adapté qui comprend une composante magnétique. Cette composante magnétique permet de guider le branchement de l'embout de connexion au raccord correspondant et améliore la rétentivité du raccord sur l'embout de connexion.

Dans des modes de réalisation, le connecteur extrémal peut comprendre des plots électriques. En particulier, les plots sont reliés directement ou indirectement aux bornes de la batterie, et peuvent être configurés pour recevoir un courant électrique entrant qui provient d'une source d'énergie au travers d'un raccord d'alimentation.

### [Connecteur latéral]

Dans des modes de réalisation, le connecteur latéral peut comporter une interface de connexion qui s'étend selon un axe de connexion B-B formant un angle α compris entre 25° et 90° par rapport à l'axe longitudinal A-A. Cette orientation particulière permet de positionner la tête de connexion, dans le logement, entre la paroi interne du bras et le module batterie.

Dans des modes de réalisation, le module batterie peut comprendre une portion de connexion latérale dont la section transversale est de dimensions réduites notamment par rapport aux dimensions de la section transversale du compartiment batterie, ladite interface intégrant le connecteur latéral. La section transversale de dimensions réduites fournit un espace permettant d'insérer la tête de connexion entre la portion de connexion et la paroi interne du logement lorsque le module batterie est inséré dans le logement. La tête de connexion peut ainsi être maintenue en position par la paroi interne du bras, ce qui simplifie la conception mécanique de la tête de connexion et du module batterie. Le connecteur latéral peut être avantageusement positionné sur le module batterie de manière distale par rapport de disque de détection, ce qui permet de limiter le nombre de spires du câble de puissance.

Le connecteur latéral peut être ainsi positionné sur la partie supérieure du module batterie ce qui permet de le rapprocher des moyens de rechargement. Ces derniers sont, de préférence, disposés à l'extrémité du module batterie qui est alors accessible sans que le module batterie soit extrait de son logement. Cette configuration permet avantageusement de regrouper toute l'électronique du module batterie en un seul endroit, ici la portion de connexion, éliminant ainsi la nécessité de raccorder ces deux fonctions par une nappe ou un câble. On parle ici de la fonction de recharge de la batterie et de la fonction d'alimentation du disque de puissance. Cette simplification améliore la fiabilité et réduit l'encombrement module batterie. De plus, le module batterie peut ainsi se limiter à deux éléments assemblés : le compartiment batterie et la portion de connexion. Ceci diminue les risques de perte d'étanchéité du module batterie.

En outre, le module batterie peut comporter une gorge de rétention qui permet de retenir la tête de connexion de manière coaxiale du connecteur latéral. La gorge de rétention peut s'étendre, par exemple, selon un axe parallèle à l'axe longitudinal A-A. En particulier, la gorge de rétention peut s'opposer à la force de rappel qu'applique le câble de puissance sur la tête de connexion au travers de sa portion enroulée également connue sous le nom de spirale. La gorge de rétention peut s'opposer notamment à la traction qui est appliquée par la spirale du câble de puissance sur la tête de connexion. A ces fins, la gorge de rétention peut s'étendre sur une face latérale de la portion de connexion. Cette gorge de rétention peut être formée par deux saillies opposées qui s'étendent sur la face latérale de la portion de connexion. Les saillies peuvent ainsi s'étendre parallèlement à l'axe longitudinal A-A et être ajustées à la paroi interne du logement du bras. La hauteur des saillies peut être définie pour compenser les dimensions réduites de la portion de connexion de manière à être ajustée à la paroi interne du logement du bras.

Par ailleurs, la gorge peut aussi constituer également un détrompeur en permettant de positionner la tête de connexion de manière coaxiale du connecteur latéral. Si la tête de connexion n'est pas correctement positionnée par rapport à la gorge, la tête de connexion bute contre l'extrémité du logement et permet pas l'insertion du module batterie.

Dans des modes de réalisation, le module batterie peut comporter une niche à laquelle est intégrée le connecteur latéral, la niche étant complémentaire de la tête de connexion du câble de puissance. La niche assure un emboitement de la tête de connexion sur le connecteur latéral, notamment, un emboitement facile de type « plug and play ». Par exemple, la niche peut être disposée sur la portion de connexion entre la gorge de rétention et le connecteur extrémal. Plus précisément, dans certains modes de réalisation, la niche peut être intercalée entre la gorge de rétention et l'épaulement de l'embout de connexion axial. La niche améliore le branchement du connecteur latéral en positionnant la tête de connexion de manière coaxiale de l'interface de connexion du connecteur latéral. Dans cette optique, la niche peut comprendre une conformation circulaire fournissant un logement cylindrique configuré pour recevoir la tête de connexion.

Dans des modes de réalisation, le connecteur latéral peut comporter :
- un brochage électrique relié directement ou indirectement à la batterie, et
- un brochage électronique relié à des moyens électroniques intégrés au module batterie, de préférence, les moyens électroniques sont configurés pour moduler la valeur de la tension en sortie de la batterie.

Par exemple, le brochage électrique et le brochage électronique peuvent respectivement comprendre au moins deux broches et de préférence, au moins quatre broches.

Les deux broches peuvent permettre au connecteur latéral de transmettre une puissance électrique modulable à la bobine du détecteur de métaux. Deux broches supplémentaires peuvent permettre de transmettre des données électroniques par le câble de puissance. L'intensité du champ magnétique peut ainsi être modulée selon les besoins de l'utilisateur et/ou le type de substrats dans lequel est menée la recherche de métaux. Pour cela, les moyens électroniques du module batterie peuvent être adaptés à dialoguer, au travers des broches électroniques et du câble de puissance, avec des organes électroniques déportés, par exemple, avec des organes électroniques disposés dans un disque de détection. Par ailleurs, les moyens électroniques peuvent comprendre un convertisseur de puissance qui est adapté à dialoguer avec une unité de contrôle disposée dans le disque de détection. L'unité de contrôle peut être connectée à distance avec un boitier de commande du détecteur de métaux. L'utilisateur peut ainsi ajuster l'intensité du champ magnétique émis par la bobine au travers du boitier commande qui transmet l'information vers l'unité de contrôle qui peut ensuite piloter notamment le convertisseur de puissance pour fournir la puissance électrique adaptée selon l'intensité du champ magnétique sélectionnée par l'utilisateur. Typiquement, l'unité de contrôle peut être comprendre un microprocesseur associé à des mémoires et des horloges électroniques.

### [Tête de connexion]

Dans des modes de réalisation, la tête de connexion peut comporter un corps de retenu configuré pour maintenir la tête de connexion de manière coaxiale du connecteur latéral. De surcroît, le corps de retenu peut avantageusement comprendre une face externe aplatie qui est configurée pour être mise au contact de la paroi interne du bras. Le corps de retenu peut ainsi être disposé entre la portion de connexion et la paroi interne du logement. Dans certains modes de réalisation, le corps de retenu peut être configuré pour coopérer avec la gorge de rétention du module batterie. Pour cela, le corps de retenu peut comprendre des dimensions supérieures à celles de la gorge de rétention de sorte que le câble de puissance court à l'intérieur de la gorge de retenu alors que le corps de retenu est positionné en butée des saillies de ladite gorge. Le corps de retenu peut également comprendre des ailettes arrondies au niveau de la connexion avec le câble de puissance ce qui lui donne une forme longitudinale sensiblement trapézoïdale. Le terme sensiblement est utilisé car les angles de la forme trapézoïdale peuvent être arrondis. Les ailettes peuvent être placées en butée des saillies de la gorge.

Dans des modes de réalisation, la tête de connexion peut comporter un embout de connexion saillant du corps de retenu, l'embout de connexion étant complémentaire du connecteur latéral. En particulier, l'embout de connexion peut être complémentaire de la niche et configuré pour s'emboiter dans la niche. L'embout de connexion améliore, d'une part, le positionnement coaxial de la tête de connexion par rapport au connecteur latéral, et d'autre part, la rétentivité de la tête de connexion sur le connecteur latéral.

En outre, l'embout de connexion peut comprendre un organe d'étanchéité qui crée une étanchéité lorsque l'embout est inséré dans la niche. De préférence, l'embout peut être cylindrique et de dimensions adaptées pour être inséré dans la niche. L'organe d'étanchéité peut comprendre un joint torique ménagé à la périphérie de l'embout et coopérant avec le logement cylindrique que fournit la niche. L'organe d'étanchéité est ainsi visible, ce qui facilite son contrôle, son nettoyage et son remplacement. L'étanchéité de cette connexion permet d'utiliser le détecteur de métaux en milieu aquatique. L'utilisation d'un joint torique apporte une solution efficace et peu onéreuse pour fournir une connexion étanche entre l'embout et la niche.

Dans des modes de réalisation, l'élément d'extraction est couplé à la tête de connexion et s'étend longitudinalement dans le prolongement de la tête de connexion. Lorsque la tête de connexion est assemblée au connecteur latéral, notamment par la niche, l'élément d'extraction permet d'extraire plus facilement la tête de connexion et le module batterie du logement. Ceci peut être utile pour réaliser l'entretien du module batterie ou encore pour remplacer la batterie lorsque cela est nécessaire. La batterie peut être remplacée par une batterie chargée ou par une batterie neuve selon la situation. Lorsque la tête de connexion est assemblée au connecteur latéral, notamment par la niche, l'élément d'extraction peut aussi permettre d'extraire plus facilement le module batterie du logement. L'élément d'extraction permet également de maintenir un élément du câble de puissance à l'extérieur du bas de canne ce qui simplifie l'entretien du bras de la canne et plus largement du détecteur de métaux.

Dans des modes de réalisation, la tête de connexion peut comprendre des plots de connexion électronique et des plots de connexion électrique. Les plots sont en particulier disposés sur la face extrémale de l'embout de la tête de connexion, cette face extrémale constitue l'interface de connexion dudit embout. Les plots de la tête de connexion peuvent être configurés pour coopérer avec les brochages du connecteur latéral afin de véhiculer des données électroniques par les plots de connexion électronique et un courant électrique au travers du brochage de connexion électrique.

### [Câble de puissance]

Dans des modes de réalisation, le câble de puissance peut comprendre une portion enroulée de façon élastique. Cette portion enroulée encore appelée spirale confère des capacités d'élongation audit câble qui sont utiles pour raccorder le connecteur au disque de détection du détecteur de métaux. La portion enroulée coopère également avec l'élément d'extraction pour extraire facilement la tête de connexion et/ou le module batterie du logement du bras. L'agencement particulier du module batterie et de ces deux connecteurs permet de réduire les dimensions de la portion enroulée du câble de puissance par rapport aux détecteurs de métaux connus de l'état de la technique.

Dans des modes de réalisation, le câble de puissance peut s'étendre entre le logement et l'extrémité de couplage au niveau de laquelle le second bout dudit câble sort du bras afin d'être connecté au disque de détection. Dans cette optique, le câble de puissance peut comprendre au moins quatre fils permettant de transférer des données électroniques et un courant électrique entre le module batterie et un élément déporté du module batterie comme le disque de détection du détecteur de métaux.

### [Bras de la canne]

Dans des modes de réalisation, le bras peut être tubulaire et comprendre une section transversale de forme déterminée, le bras comprend donc une cavité longitudinale dans laquelle peut s'étendre le câble de puissance. Avantageusement, le module batterie peut être configuré pour n'occuper qu'une seule portion de la section transversale du bras. Cela fournit un passage pour que le câble de connexion puisse s'étendre entre le module batterie et la paroi interne du bras mais aussi pour que la tête de connexion soit positionnée dans la cavité du bras entre le module batterie et la paroi interne du bras. La section transversale peut être de forme trapézoïdale et comprendre des angles arrondis, cela explique pourquoi cette forme peut être qualifiée de forme sensiblement trapézoïdale. Dans ce cas, le module batterie peut occuper par la section transversale du bras dans la portion la plus grande de la forme trapézoïdale.

Le logement peut ainsi être constitué par une portion de la cavité longitudinale du bras qui est, de préférence, disposée à proximité d'une extrémité du bras. Par exemple, lorsque le bras comporte un bas de canne et un haut de canne, le logement peut être disposé à une extrémité du bas de canne qui fait jonction avec le haut de canne. Le bas de canne peut ainsi être facilement industrialisable.

Dans des modes de réalisation, l'extrémité de couplage peut être configurée pour être articulée au disque de détection. Le disque de détection peut ainsi être articulé au bas de canne de manière à fournir un disque de détection orientable.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] est une représentation schématique d'une vue éclatée d'un détecteur de métaux conforme d'un mode de réalisation de l'invention.
[Fig. 2] est une représentation en perspective d'un tronçon d'un bras de canne de détecteur de métaux conforme d'un mode de réalisation de l'invention, le bas de cas étant représenté en coupe alors qu'il est articulé à un disque de détection d'un détecteur de métaux.
[Fig. 3] est une représentation en perspective d'un tronçon d'un bras de canne conforme d'un mode de réalisation de l'invention, le module batterie étant connecté, par le connecteur extrémal, à un raccord d'un câble d'alimentation.
[Fig. 4] est une représentation de la figure 3 selon une coupe transversale et le tronçon de bras de la canne étant orientée différemment.
[Fig. 5] est une représentation du bras de la canne de la figure 3, le module batterie étant partiellement sorti du bras de la canne.
[Fig. 6] est une représentation en coupe d'une extrémité du bras de la canne de la figure 4.
[Fig. 7] est une représentation en coupe, selon une vue similaire à la figure 6, du module batterie extrait du bras de la canne, le module batterie étant connecté, d'une part, à un raccord d'un câble d'alimentation par le connecteur extrémal, et d'autre part, à un câble de puissance par le connecteur latéral.
[Fig. 8] est une représentation de l'extrémité d'un bras de canne conforme d'un mode de réalisation de l'invention, le module batterie étant inséré dans le bras de la canne.
[Fig. 9] est une représentation de l'extrémité du bras de canne de la figure 6, le module batterie étant partiellement sortie du bras de la canne.
[Fig. 10] est une représentation d'une vue éclatée de la figure 7.
[Fig. 11] est une représentation d'un module batterie conforme d'un mode de réalisation de l'invention.
[Fig. 12] est une représentation d'un câble de puissance dont la tête de connexion est connectée au connecteur latéral d'un module batterie conforme d'un mode de réalisation de l'invention.
[Fig. 13] est une représentation en perspective d'une tête de connexion et d'un câble de puissance conformes d'un mode de réalisation de l'invention.

### [Description des modes de réalisation]

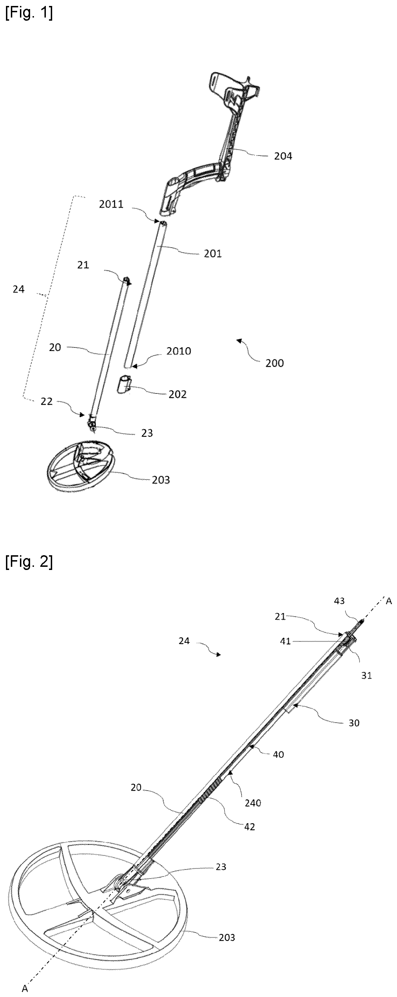

La figure 1 est une vue éclatée du détecteur de métaux 200 conforme d'un mode de réalisation de l'invention qui comporte notamment un bas de canne 20 et un haut de canne 201 qui sont configurés pour s'emboiter de manière à former le bras 24 de la canne du détecteur à métaux 200. Le bras 24 comprend ainsi deux tronçons 20, 201. En particulier, le haut de canne 201 peut comporter une section transversale légèrement supérieure à celle du bas de canne 20 pour être emboité sur une extrémité de jonction 21 du bas de canne 20. L'assemblage du bas de canne 20 avec le haut de canne 201 peut être réalisé à l'aide d'une bride d'assemblage 202 qui est disposée à l'extrémité inférieure 2010 du haut de canne 201. La bride 202 permet également de régler la longueur de la canne de manière télescopique. Le bas de canne 20 peut aussi comprendre des moyens de couplage qui sont disposés à une extrémité de couplage 22. L'extrémité de couplage 22 est opposée de l'extrémité de jonction 21. Les moyens de couplage permettent de coupler le disque de détection 203 du détecteur de métaux 200. Les moyens de couplage peuvent comprendre une articulation 23 qui assure un couplage rotatif du disque de détection 203 au bas de canne 20. Ici, l'articulation 23 comprend un axe alors que le disque de détection 203 comprend des paliers configurés de manière à accueillir ledit axe (voir figure 2).

Le disque de détection 203 peut comprendre une ou des bobines configurées pour émettre et recevoir un champ électromagnétique. Le disque détection 203 peut également comprendre des organes électroniques tels que des moyens d'excitation de la bobine émettrice, une bobine réceptrice, un amplificateur des composants de traitement du signal mais aussi des moyens de pilotage de la tension appliquée à la ou les bobines. En particulier, les moyens de pilotage peuvent comprendre une unité de contrôle qui est configurée pour dialoguer à distance ou de manière filaire avec un boitier de commande. Le boitier de commande peut comprendre quant à lui une interface homme-machine pour permettre à l'utilisateur de régler la puissance de détection en fonction des spécificités du substrat dans lequel il mène ses recherches de métaux ainsi que des moyens d'opérer des réglages de détection et d'afficher les cibles métalliques sur un écran. En général, le boitier de commande est disposé au niveau de la poignée 204 du détecteur de métaux afin de permettre une manipulation ergonomique. La poignée 204 est configurée pour être assemblée à une extrémité supérieure 2011 du haut de canne 201. Le boitier de commande peut aussi se démonter pour se porter par exemple à la ceinture, dans certains cas, le boitier de commande peut aussi se situer dans ou sur le casque audio sans fil de l'opérateur.

Comme illustré à la figure 2, le disque de détection 203 est articulé au bas de canne 20 via l'articulation 23. Dans cet exemple, le bas de canne 20 du bras 24 s'étend ainsi selon un axe longitudinal A-A. Le bras 24 est plus particulièrement représenté selon une coupe transversale pour que les éléments qu'il contient soient visibles. Comme cela est illustré, le bras 24 est tubulaire et comprend une section transversale qui peut par exemple être trapézoïdale et comprendre des angles arrondis. Le bras 24 comprend donc une cavité longitudinale 240 qui s'étend également selon l'axe A-A. La cavité longitudinale 240 peut également disposer d'une section transversale reprenant la forme de la section transversale du bras 24.

Comme cela est visible à la figure 2, le détecteur de métaux 200 comprend un module batterie 30 qui peut être inséré de manière amovible dans un logement ménagé dans la cavité longitudinale 240 du bras 24. Le module batterie 30 s'étend ici selon l'axe longitudinal A-A. Selon ce mode de réalisation, le logement qui contient le module batterie 30 est constitué par une portion de la cavité longitudinale 240. Comme illustré à la figure 2, ladite portion est préférentiellement disposée à proximité de l'extrémité de jonction 21 qui est configurée pour être assemblée au haut de canne 201 du détecteur de métaux 200 de la figure 1. En outre, le détecteur de métaux 200 comporte un câble de puissance 40 qui relie le module batterie 30 au disque de détection 203. En particulier, le câble de puissance 40 peut être connecté directement ou indirectement aux bornes de la ou des bobines. Par exemple, le câble de puissance 40 peut être relié aux moyens d'excitation de la ou des bobines émettrices. Pour cela, le câble de puissance 40 s'étend dans la cavité longitudinale 240 du bras 24 entre un connecteur latéral 31 du module batterie 30 et le disque de détection 203.

Le câble de puissance 40 comprend une tête de connexion 41 qui est reliée au connecteur latéral 31 à proximité de l'extrémité de jonction 21 du bras 24. A l'intérieur du bras 24, le câble de puissance 40 comprend une portion enroulée 42 de façon élastique qui se trouve entre l'extrémité de couplage 22 et le module batterie 30. En outre, de façon avantageuse, le câble de puissance 40 peut également comprendre une tirette 43 qui dépasse de l'extrémité de jonction. La tirette 43 constitue un moyen d'extraction du module batterie 30. Ici, la tirette 43 est couplée au module batterie 30 au travers de l'assemblage de la tête de connexion 41 avec le connecteur latéral 31. L'utilisateur peut utiliser la tirette 43 comme élément d'extraction pour extraire la tête de connexion 41 et/ou le module batterie 30 du logement du bras 24. Lors de l'extraction du module batterie 30, la portion enroulée 42 donne avantageusement au câble de puissance 40 de l'élasticité pour permettre cette traction sans déconnecter par ailleurs le câble de puissance 40 du disque de détection 203.

Selon un mode de réalisation, le module batterie 30 peut avantageusement comprendre des moyens rechargement filaire ou sans fil en vue de recharger la batterie, la batterie peut ainsi être rechargée sans extraire le module batterie 30 de son logement.

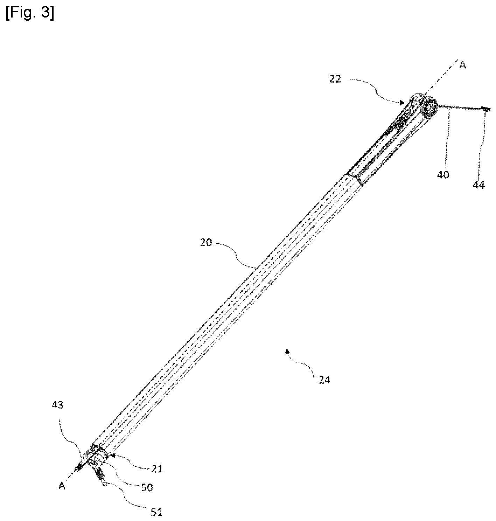

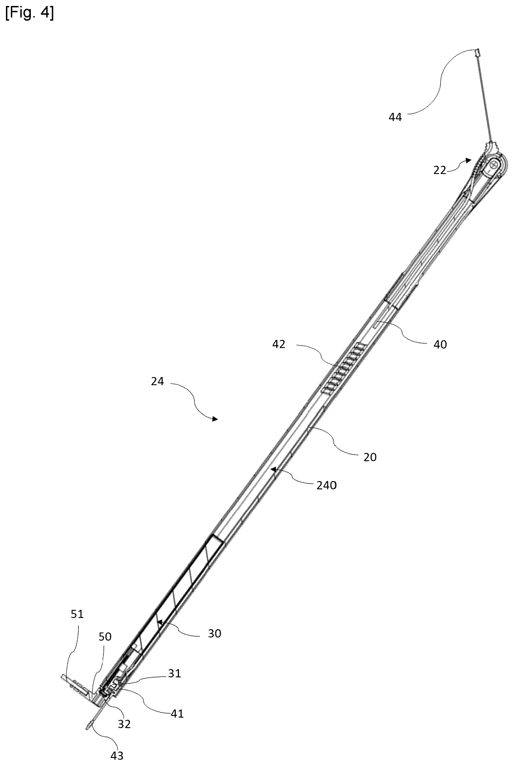

Les figures 3 et 4 illustrent un mode de réalisation, dans lequel, les moyens de rechargement du module batterie 30 comprennent un connecteur extrémal 32 qui s'étend dans l'axe longitudinal A-A. Contrairement au connecteur latéral 31 qui est disposé dans le logement, le connecteur extrémal 32 émerge de l'extrémité de jonction 21 et comprend une interface de connexion orientée vers l'extérieur du logement. Dans cet exemple, l'interface de connexion s'étend selon l'axe longitudinal A-A. Dans l'exemple des figures 3 et 4, le connecteur extrémal 32 est branché à un raccord d'alimentation 50 qui peut être connecté à une source d'énergie électrique. Cette dernière peut être fixe, par exemple, il peut s'agir d'une prise secteur reliée à réseau de distribution. La source d'énergie électrique peut également être une autre batterie, par exemple, une batterie portative ou encore une batterie de véhicule. Un transformateur peut être associé au raccord d'alimentation 50 lorsque celui-ci est branché sur une prise secteur. Selon les illustrations des figures 3 et 4, seul le début du fil d'alimentation 51 est représenté alors qu'en pratique il rejoint un transformateur ou un connecteur adapté selon la source d'énergie à laquelle le fil d'alimentation 51 est relié.

Dans des modes de réalisation, le connecteur extrémal 32 peut être substitué par une bobine électromagnétique compatible avec une recharge induction. Ladite bobine peut-être couplée au module batterie ou alternativement au disque de détection, un fil passant alors dans le câble de puissance pour relier la batterie. Dans d'autres modes de réalisation, le connecteur extrémal 32 peut également être remplacé par un connecteur disposé sur le disque de détection, un fil électrique intégré au câble de puissance 40 permettant de transmettre le courant de rechargement jusqu'au module batterie 30. Lorsque le module batterie 30 ne comprend que le connecteur latéral 31, le logement peut être disposé en n'importe quelle position dans le bras 24 de la canne, toutefois, le logement est préférentiellement disposé dans le bas de canne 20 pour limiter la longueur du câble de puissance 40 et notamment de la spirale de ce câble.

Comme illustré aux figures 3 et 4, le câble de puissance 40 comporte, à un premier bout, la tirette 43 qui émerge de l'extrémité de jonction 21 alors que le connecteur extrémal 32 est connecté au raccord d'alimentation 50. Un second bout du câble de puissance 40 émerge de l'extrémité de couplage 22. Au niveau de l'extrémité 22, le second bout du câble de puissance 40 peut comprendre un connecteur 44 adapté à fournir un courant électrique sortant de tension déterminée. Ce connecteur 44 est adapté à être relié directement ou indirectement aux bornes de la ou des bobines émettrices du disque de détection 203. C'est notamment le cas dans l'exemple de la figure 2, même si, le connecteur 44 n'est pas visible car il est branché sur des moyens électroniques qui sont disposés dans le disque de détection 203.

La figure 4 est une représentation en coupe d'une portion du bras 24 qui peut être un bas de canne 20. Les éléments du détecteur de métaux 200 qui sont agencés dans la cavité longitudinale 240 du bras 24 sont visibles sur cette figure. On retrouve notamment le module batterie 30 disposé dans la cavité du bras au niveau de l'extrémité de jonction 21 mais aussi le câble de puissance 40. On voit ici que la tête de connexion 41 est connectée latéralement au connecteur latéral 31 à l'intérieur du bras 24 alors que le connecteur extrémal 32 est connecté au raccord d'alimentation 50. Dans le même temps, le module batterie 30 est contenu dans le logement, c'est-à-dire, dans la cavité 240 du bras 24.

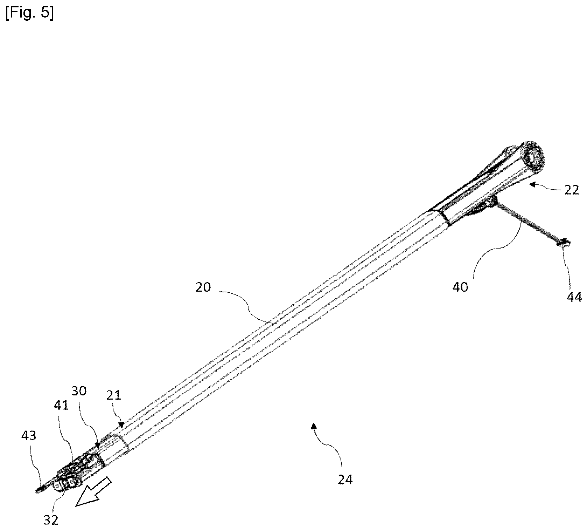

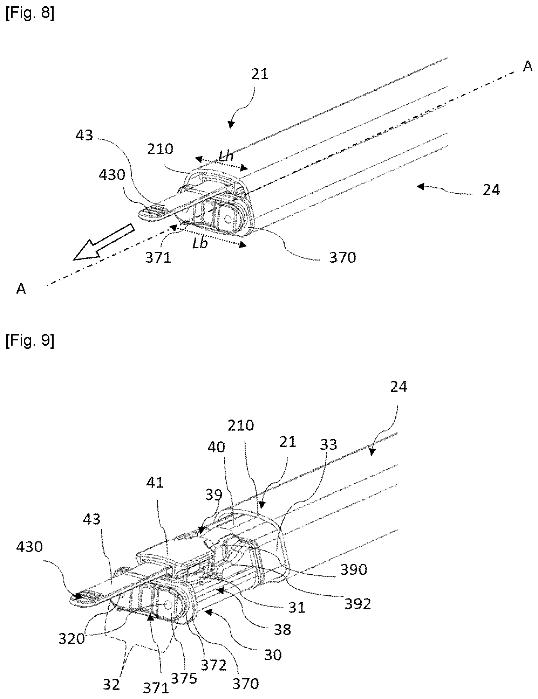

Dans l'exemple de la figure 5, une partie du module batterie 30 émerge de l'extrémité de jonction 21. Le module batterie a pu être sorti à la suite d'une traction appliquée sur la tirette 43. Cette traction est illustrée par une flèche. Sur la figure 5, le connecteur extrémal 32 du module batterie 30 est déconnecté de tout raccord d'alimentation, alors que le connecteur latéral 31 est toujours connecté à la tête de connexion 41 du câble de puissance 40. La tirette 43 est d'ailleurs reliée à la tête de connexion 41 selon un axe longitudinal comme cela est visible notamment visible aux figures 9, 10 et 11. Lorsque le module batterie 30, le bras 24 et le câble de puissance 40 sont assemblés la tirette s'étend selon l'axe longitudinal A-A, voir par exemple figure 8.

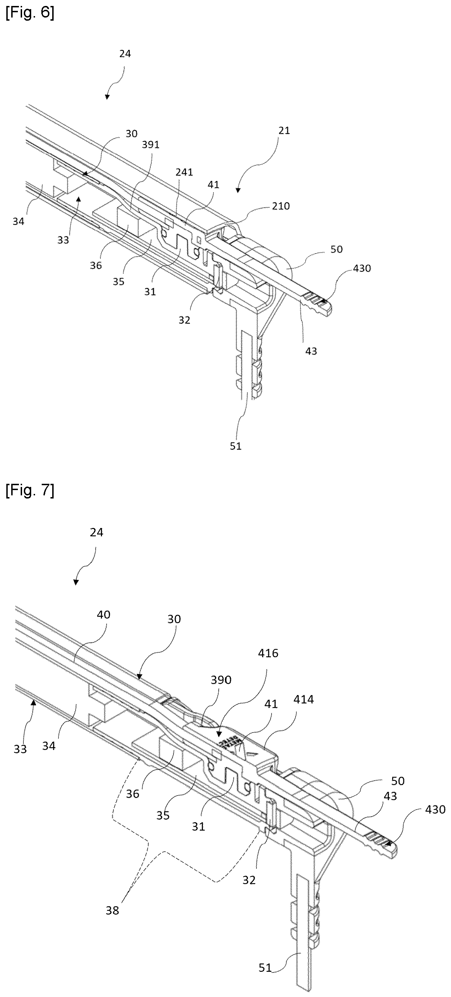

Les figures 6 à 9 illustrent plus particulièrement la coopération entre le module batterie 30 son logement et le câble de puissance 40 conformément à des modes de réalisation de l'invention.

En particulier, la figure 6 est une vue agrandie du logement disposé à un extrémité 21 du bras tel qu'illustré aux figures 3 et 4. Selon ce mode de réalisation, le module batterie 30 comporte un compartiment étanche 33 qui contient une batterie rechargeable 34. Le compartiment s'étend selon l'axe longitudinal A-A afin que le module batterie 30 puisse être inséré de manière amovible dans son logement. En outre, le module batterie 30 comprend une carte électronique 35 à laquelle sont reliés les connecteurs 31, 32. Ici, la carte électronique 35 est aussi disposée dans un prolongement du compartiment étanche 33 qui peut comporter une section transversale dont les dimensions sont inférieures aux dimensions de la section transversale du compartiment 33.

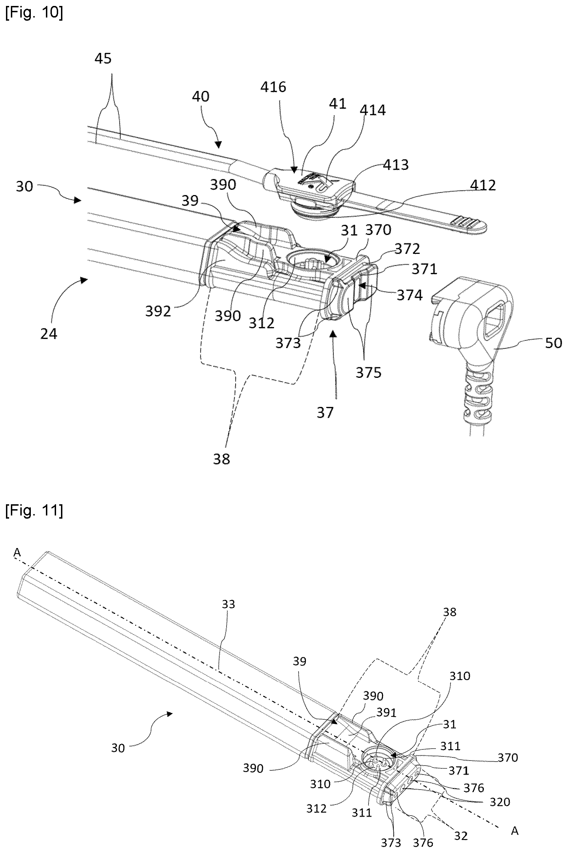

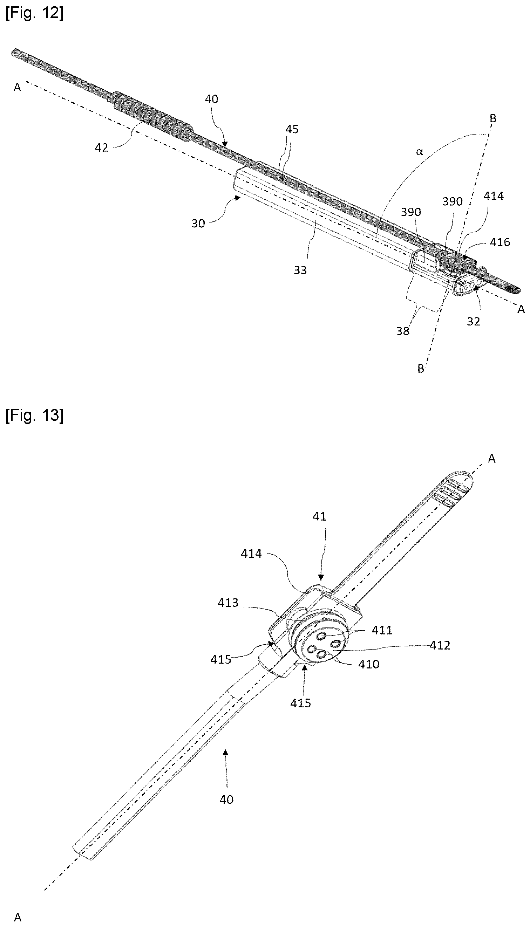

Le module batterie 30 peut aussi embarquer des composants électroniques configurés pour moduler la valeur de la tension en sortie de la batterie 34. Par exemple, la carte électronique 35 peut être reliée à un convertisseur de tension 36 également disposé dans le compartiment 33. La carte électronique 35 peut comprendre des composants électroniques capables de dialoguer avec les moyens de pilotage de la bobine. Les données de pilotage peuvent alors transitées par le câble de puissance 40. En effet, comme illustré à la figure 11, le connecteur latéral 31 peut comprendre un brochage électrique et un brochage électronique. Le brochage électrique peut comprendre au moins deux broches 310 adaptées à transmettre un courant électrique. Les deux broches 310 sont donc reliées directement ou indirectement à la batterie 34 via la carte électronique 35. Alors que le brochage électronique peut comprendre au moins deux autres broches 311 adaptées à transmettre des données électroniques, pour cela, elles peuvent être reliées à des composants électroniques capables de dialoguer avec les moyens de pilotage de la ou des bobines au travers du câble de puissance 40. Afin de véhiculer les données de puissance, le câble de puissance 40 peut comporter en sus des deux fils électriques, deux fils permettant de transmettre des données électroniques. Le câble de puissance 40 peut ainsi comprendre deux gaines 45 comprenant chacune deux fils. Les deux gaines 45 sont soudées ensemble et s'étendent depuis la tête de connexion 40 jusqu'au connecteur 44. Comme illustré à la figure 12, les deux gaines 45 sont enroulées de manière à former la portion enroulée du câble de puissance 40. D'ailleurs, la tête de connexion 41 peut comporter des plots 410, 411 qui sont configurés pour coopérer avec les brochages du connecteur latéral 31. Dans l'exemple de la figure 13, la tête de connexion comprend quatre plots 410, 411 disposés deux à deux. En particulier, deux plots 410 configurés pour coopérer avec les broches électriques 310 et deux autre plots 411 configurés pour coopérer avec les broches électroniques 311.

Le connecteur latéral 31 est donc configuré, d'une part, pour délivrer un courant sortant depuis la batterie rechargeable 34 à destination de la ou des bobines du détecteur de métaux 200, et d'autre part, pour transmettre des données de puissance depuis le module batterie 30 vers les moyens des pilotages de puissance qui peuvent se trouver dans le disque de détection 203.

Selon un mode de réalisation visible à la figure 6, la tête de connexion 41 est coincée entre la paroi interne 241 du bras 24 et le connecteur latéral 31 tout en étant au contact de ce dernier. Pour cela, les dimensions du module batterie 30 sont ajustées aux dimensions du logement de sorte que la tête de connexion 41 soit maintenue, au contact du connecteur latéral 31, en étant enserrée entre la paroi interne 241 du bras 24 et le connecteur latéral 31. Ceci permet de s'affranchir d'un connecteur fileté pour relier le câble de puissance au module batterie comme cela peut être le cas dans l'art antérieur.

La position du connecteur extrémal 32 sur le module batterie 30 permet quant à elle de le maintenir de manière saillante de l'extrémité de jonction 21 du bras 24. Le connecteur extrémal 32 est ainsi accessible à un raccord d'alimentation 50 adéquat pour recharger la batterie 34 sans extraire du bras 24 ni le module batterie 30 ni le câble de puissance 40.

Comme illustré à cet figure 6, la tirette 43 peut comprendre une succession de stries 430 pour améliorer sa préhension. Les stries 430 sont dans cet exemple disposées à l'extrémité libre de la tirette 43 qui est configurées pour sortir du bras. La tirette 43 permet à l'utilisateur d'exercer une traction selon une direction parallèle de l'axe A-A sur la tête de connexion 41, une flèche illustre cela à la figure 8. La tête de connexion 41 qui est assemblée au connecteur latéral 31 de manière perpendiculaire à l'axe A-A permet d'extraire le module batterie 30 de la cavité du bras 24. Le module batterie 30 est extrait du bras 24 sans que l'assemblage entre la tête de connexion 41 et le connecteur latéral 31 ne soit défait.

La figure 6 montre un module batterie 30 conforme d'un mode de réalisation qui est sorti du bras et est assemblé, d'une part, au câble de puissance 40 par le connecteur latéral 31, et d'autre part, à un raccord d'alimentation 50 au travers du connecteur extrémal 32.

En particulier, comme illustré aux figures 8 à 10, le module batterie 30 peut comprendre, à une extrémité, un embout de connexion 37 qui porte le connecteur extrémal 32. L'embout de connexion 37 est configuré pour être saillant de l'extrémité de jonction 21 du bras 24 pour être accessible notamment à un raccord d'alimentation 50 tel qu'illustré aux figures 3, 4 et 6. A ces fins, l'embout de connexion 37 comprend un épaulement 370 configuré pour prendre appui sur des bords libres 210 de l'extrémité de jonction 21 du bras 24. En particulier, l'épaulement 370 est configuré pour prendre appui sur la tranche des bords libres 210. L'épaulement 370 s'oppose ainsi à l'insertion intégrale du module batterie 30 dans le bras 24. Les bords libres 210 sont visibles à la figure 6. Dans l'exemple des figures 8 et 9, l'épaulement 370 correspond à une collerette qui s'étend autour d'une extension 371 de l'embout de connexion 37.

Comme cela est visible à la figure 8, le bras 24 comporte une section transversale de forme trapézoïdale à angles arrondis qui donne une partie basse plus large que la partie haute. Ceci est matérialisé par largeur Lh en partie haute de la section transversale, dont les dimensions sont inférieures à la largeur *Lb* de la partie basse. Or, l'épaulement 370 prend appui sur les bords libres 210 uniquement en partie basse de la section transversale du bras ce qui laisse une ouverture en partie haute de la section transversale pour que la tirette 43 émerge de la cavité du bras 24. De préférence, le module batterie 30 occupe la partie basse de la section transversale, ce qui laisse le passage en partie haute pour que le câble de puissance 40 s'étende le long du compartiment batterie jusqu'à la tête de connexion 41 qui est également positionnée en partie haute de la section transversale. La tête de connexion 41 est ainsi enserrée, dans la partie haute de la section transversale, entre le connecteur latéral 31 et la paroi interne 241 du bras 24.

Comme cela est notamment visible aux figures 9 et 10, l'embout de connexion 37 peut comprendre des moyens d'assemblage à un connecteur d'alimentation. L'extension 371 est saillante de l'épaulement 370 et permet de ménager une rainure de clippage 372 qui se trouve en avant de l'épaulement 370. En particulier, comme illustré à la figure 10 la rainure 372 peut s'étendre uniquement sur une partie du pourtour de l'extension 371. Ce qui a pour effet de fournir un détrompeur pour connecter un raccord d'alimentation 50 complémentaire de l'embout de connexion 37. Les moyens d'assemblage peuvent également comprendre des ergots 373 qui forment des éléments males d'assemblage. Dans l'exemple de la figure 10, les ergots 373 sont ménagés sur le pourtour de l'extension 371 du côté opposé à la rainure 372. L'extension 371 peut aussi comprendre une rainure extrémale 374 et deux protubérances 375 disposées de part et d'autre de la rainure extrémale 374. La rainure 374 crée un axe de symétrie des protubérances 375 et des deux plots 320 du connecteur extrémal 32. Chaque plot 320 peut être disposé sur une protubérance 375 tel que cela est visible à la figure 9. Les protubérances 375 constituent des éléments d'assemblage males. L'extension 371 porte ainsi les moyens d'assemblage et les plots 320 du connecteur extrémal 32, en ce sens, l'extension 371 peut être considérée comme le connecteur extrémal 32. Le connecteur extrémal 32 est configuré pour transmettre un courant entrant à la batterie 34, les deux plots 320 du connecteur extrémal 32 peuvent ainsi être reliés directement ou indirectement aux bornes de la batterie 33.

Dans l'exemple de la figure 11, les moyens d'assemblage comportent des aimants 376 permettant un assemblage magnétique avec un raccord d'alimentation 50 adapté. Les aimants 376 sont ici disposés de part et d'autre des plots 320 du connecteur 32. L'extension 371 comporte également deux ergots disposés au niveau de deux arrêtes du pourtour de l'extension 371 comme c'est le cas à la figure 10. L'extension 371 forme ici une protubérance unique dont l'extrémité est une face plane à laquelle sont intégrées les aimant 376 et les plots 320. Bien que cela ne soit pas représenté, les aimants 376 peuvent être utilisés en association avec l'extension de la figure 10 en étant positionnés de part et d'autre des plots 320 et/ou dans la rainure 374.

Comme cela est notamment visible aux figures 9 à 11, le module batterie 30 peut comprend une portion de connexion 38 latérale dont la section transversale est de dimensions réduites par rapport aux dimensions du compartiment 33 qui contient la batterie 34. Cette portion de connexion 38 intègre le connecteur latéral 31. La figure 7 montre que la section transversale de dimensions réduites de la portion de connexion 38 fournit un espace permettant à la tête de connexion 40 de s'intégrer dans cet espace lorsqu'elle est couplée au connecteur 31 dans les dimensions hors tout du module batterie 30. Lorsque le module batterie 30 et la tête de connexion 40 sont insérés dans le logement du bras 24, la tête de connexion 40 occupe l'espace qui est ménagé entre la portion de connexion 38 et la paroi interne 241 du logement tel que cela est visible à la figure 6. Lorsque le bas de canne 20 est assemblé, cet espace permet d'enserrer la tête de connexion 40 entre la portion de connexion 38 et la paroi interne 241 du bras 24 voir notamment la figure 6. De la sorte, le module batterie 30 est inséré dans le logement de manière que le compartiment 33 soit proximal du disque de détection alors que le connecteur latéral 31 est disposé à une extrémité opposée du compartiment 33 de façon à être position de manière distale par rapport au disque de détection.

Le module batterie 30 peut aussi comporter une gorge de rétention 39 qui s'étend parallèlement à l'axe longitudinal A-A comme cela peut être illustré à la figure 11. En particulier, la gorge de rétention 39 s'étend sur la portion de connexion 38 depuis la jonction avec le compartiment 33 batterie jusqu'au connecteur latéral 31. La gorge de rétention 39 coopère avec la tête de connexion 40 de manière à maintenir les plots 410, 411 de la tête de connexion 40 coaxiales des broches 310, 311 du connecteur latéral 31. En particulier, la tête de connexion 40 est configurée pour s'emboiter dans la gorge de rétention 39, cette dernière exerçant une réaction à la force de rappel qu'applique la portion enroulée 42 du câble de puissance 40 sur la tête de connexion 41. La gorge de rétention 39 maintient, de ce fait, la tête de connexion 41 au contact du connecteur latéral 31.

Comme illustré aux figures 9 à 11, deux saillies 390 qui s'étendent parallèlement à l'axe longitudinal A-A et forment la gorge de rétention 39. Les saillies 390 peuvent être dimensionnées de manière à être ajustées à la paroi interne 241 du logement du bras 24. La gorge de rétention 39 comporte aussi un fond 391 qui s'étend entre le compartiment 33 batterie et le connecteur 31. Au moins une partie du fond 391 peut être incliné par rapport à la paroi du compartiment 33 batterie qui est prolongée par le fond 391. Ceci compense la différence de dimensions transversales entre la portion de connexion 38 et le compartiment 33 batterie.

Dans des modes de réalisation illustrés notamment aux figures 9 et 10, la gorge de rétention 39 peut comporter des renforts latéraux 392 pour améliorer la résistance mécanique des saillies 390. Les renforts latéraux 393 s'étendent ici sur la portion de connexion 38 à l'extérieur des saillies 392 et contre ces dernières.

Comme illustré à la figure 11, le module batterie 30 comporte une niche 312 à laquelle est intégrée le connecteur latéral 31. La niche 312 est intégrée dans la portion de connexion 38 latérale entre la gorge de rétention 39 et l'épaulement 370. La niche 312 constitue un organe femelle d'assemblage qui est complémentaire de la tête de connexion 41 alors que cette dernière comprend un organe male d'assemblage. La niche 312 est ici de conformation circulaire fournissant un logement cylindrique configuré pour recevoir un organe male de la tête de connexion 40. Les broches 310, 311 du connecteur latéral 31 sont disposées dans le fond de la niche 312.

La tête de connexion 40 peut comporter un embout de connexion 412 qui constitue l'organe male complémentaire du connecteur latéral 31 et en particulier de la niche 312 de ce connecteur 31. L'embout de connexion 412 est visible aux figues 10 et 13, il est de forme cylindrique et comporte des dimensions adaptées pour s'emboiter dans la niche 312. L'embout de connexion 412 peut avantageusement comprendre un organe d'étanchéité 413. L'organe d'étanchéité 413 s'étend sur la périphérie de l'embout de connexion 412 environ à mi-hauteur afin de créer une étanchéité lorsque l'embout 412 est inséré dans la niche 312. L'embout de connexion 412 peut comprendre une gorge périphérique afin de recevoir un joint torique qui constitue alors l'organe d'étanchéité 413.

Comme illustré notamment aux figures 10, 12 et 13, la tête de connexion 40 peut comporter un corps de retenu 414. L'embout 412 est saillant du corps de retenu 414 de de manière à pouvoir coopérer avec le connecteur latéral 31.

Le corps de retenu 414 est configuré pour coopérer avec la gorge de retenu 39 de la portion de connexion 38 en vue de fournir une opposition à la force de rappel qu'exerce de la portion enroulée 42 du câble sur la tête de connexion 40. Pour cela, le corps de retenu comporte des dimensions transversales supérieures aux dimensions de la gorge de retenu 39 et en particulier, supérieures à l'écartement entre les saillies 390. Le câble de puissance 40 s'étend quant à lui dans la gorge de retenu 39 cela est notamment visible à la figure 12. Le corps de retenu 414 peut comprend également des ailettes 415 arrondies pour améliorer la coopération avec les saillies 390 et créer un emboitement entre les saillies 390 et le corps de retenu 414. Ces ailettes 415 sont ménagées du côté où est relié le câble de puissance 40 à la tête de connexion 41. Les ailettes 415 confèrent ainsi une forme sensiblement trapézoïdale au corps de retenu 414. Les angles dudit corps peuvent être arrondis sans toutefois lui retirer sa forme trapézoïdale. L'objectif est de maintenir la tête de connexion 40 de manière coaxiale du connecteur latéral 31. En outre, le corps de retenu 414 comprend une face 416 sensiblement aplatie qui positionnée pour être mise au contact de la paroi interne 241 du bras 24. La face 416 peut être légèrement bombée pour être ajustée à la paroi interne du bras 24 qui peut être également légèrement bombée, voir notamment les figures 8 et 9.

Dans l'exemple de la figure 12, le connecteur latéral 31 comporte une interface de connexion qui s'étend selon un axe de connexion B-B. Ici, l'axe de connexion B-B forme un angle α compris entre 25° et 90° par rapport à l'axe longitudinal A-A. L'angle α peut être différent en fonction de la conformation de la portion de connexion 38. En effet, plusieurs conformations peuvent permettre de ménager un connecteur latéral 31 permettant à la tête de connexion 41 d'être couplée au connecteur latéral 31 tout en étant maintenu en position par la paroi interne du bras.

Avantageusement, comme cela est visible à la figure 13, la tête de connexion 41 peut comprendre une interface de connexion qui est orientée de façon à s'étendre selon l'axe de connexion B-B et opérer une connexion latérale sur le module batterie 30 alors qu'une partie du câble s'étend latéralement contre le module batterie 30 telle que cela est illustrée à la figure 12. Le câble de puissance 40 et la tête de connexion 41 peuvent passer dans la cavité 240 du bras 24 au niveau du module batterie 30 notamment grâce à la conformation de ladite cavité mais aussi à la conformation du module batterie 30.

## Revendications

1. Détecteur de métaux portatif (200) comprenant une canne portant un disque de détection (203) équipé d'une ou plusieurs bobines, la canne comprend :
- un bras (24) qui s'étendant selon un axe longitudinal A-A et comportant un logement délimité par une paroi interne (241)
- un module batterie (30) inséré dans le logement, le module batterie (30) comportant un connecteur latéral (31),
- un câble de puissance (40) adapté à transmettre un courant électrique, le câble de puissance (40) comprenant, d'une part, un premier bout qui comporte une tête de connexion (41) complémentaire du connecteur latéral (31), et d'autre part, un second bout qui est relié électriquement au disque de détection et adapté à fournir un courant sortant ;
la tête de connexion (41) dudit câble (40) étant placée au contact du connecteur latéral (31), le module batterie (30) est ajusté aux dimensions du logement de sorte que la paroi interne (241) du bras (24) maintienne la tête de connexion (41) au contact du connecteur latéral (31).

2. Détecteur de métaux portatif (200) selon la revendication 1, dans lequel, le module batterie (30) est inséré de manière amovible dans le logement, de préférence, le détecteur de métaux (200) comprend un élément d'extraction (43) du module batterie (30), l'élément d'extraction (43) étant, d'une part, couplé directement ou indirectement au module batterie (30), et d'autre part, saillant du logement du bras (24).

3. Détecteur de métaux portatif (200) selon l'une des revendications 1 et 2, dans lequel, le module batterie comporte des moyens de rechargement filaires ou sans fil de la batterie, en particulier, les moyens de rechargement de la batterie comportent un connecteur extrémal (32) qui est positionné à une extrémité du logement du bras (24), de préférence, le connecteur extrémal (32) est saillant de l'extrémité du logement.

4. Détecteur de métaux portatif (200) selon l'une des revendications 1 à 3, dans lequel, le logement est disposé à une extrémité (21) du bras (24), l'embout de connexion (37) comprend un épaulement (370) configuré pour prendre appui sur au moins une portion des bords libres (210) de l'extrémité (21) du bras (24), en particulier, , le bras (24) de la canne (20) comportant un haut de canne (201) et un bas de canne (20) assemblés, le haut de canne étant couplé au manche (204) alors que le bas de canne (20) est articulé au disque de détection (203), le logement étant disposé à l'extrémité (21) du bas de canne (20) qui est assemblée au haut de canne (201).

5. Détecteur de métaux portatif (200) selon l'une des revendications 1 à 4, dans lequel, le connecteur latéral (31) comporte une interface de connexion qui est orientée selon un axe de connexion B-B formant un angle α compris entre 25° et 90° par rapport à l'axe longitudinal A-A.

6. Détecteur de métaux portatif (200) selon l'une des revendications 1 à 5, dans lequel, le module batterie (30) comprend une portion de connexion (38) latérale dont la section transversale est de dimensions réduites par rapport à la portion qui contient la batterie (34), la portion de connexion (38) intégrant le connecteur latéral (31).

7. Détecteur de métaux portatif (200) selon l'une des revendications 1 à 6, dans lequel, le module batterie (30) comporte une gorge de rétention (39) qui permet de retenir la tête de connexion (41) de manière coaxiale du connecteur latéral (31).

8. Détecteur de métaux portatif (200) selon l'une des revendications 1 à 7, dans lequel, le module batterie (30) comporte une niche (312) qui comprend le connecteur latéral (31), la niche (312) étant complémentaire de la tête de connexion (41) du câble de puissance (40).

9. Détecteur de métaux portatif (200) selon l'une des revendications 1 à 8, dans lequel, le connecteur latéral (31) comporte :
- un brochage électrique (310) relié directement ou indirectement à la batterie (34), et
- un brochage électronique (311) relié à des moyens électroniques intégrés au module batterie (30), de préférence, les moyens électroniques sont configurés pour moduler la valeur de la tension en sortie de la batterie (34) ;
les moyens électroniques étant notamment adaptés à dialoguer, au travers du brochage électronique (311) et du câble de puissance (40), avec des organes électroniques déportés, par exemple, avec des organes électroniques disposés dans un disque de détection (203).

10. Détecteur de métaux portatif (200) selon la revendication 1 à 9, dans lequel, la tête de connexion (41) comporte un corps de retenu (414) configuré pour maintenir la tête de connexion (41) de manière coaxiale du connecteur latéral (31).

11. Détecteur de métaux portatif (200) selon les revendications 7 et 10, dans lequel, le corps de retenu (414) est configuré pour coopérer avec la gorge de rétention (39) du module batterie (30), de préférence, la tête de connexion (41) comporte un embout de connexion (412) saillant du corps de retenu (414), l'embout de connexion (412) étant complémentaire du connecteur latéral (31).

12. Détecteur de métaux portatif (200) selon la revendication 2, dans lequel, l'élément d'extraction (43) est couplé à la tête de connexion (41) et s'étend longitudinalement dans le prolongement de la tête de connexion (41).

13. Détecteur de métaux portatif (200) selon l'une des revendications 1 à 12, dans lequel, le câble de puissance (40) s'étend entre le logement et l'extrémité de couplage (22) au niveau de laquelle le second bout dudit câble (40) sort du bras (24) afin d'être connecté directement ou indirectement aux bornes d'une ou des bobines disposées dans le disque de détection (203).

14. Détecteur de métaux portatif (200) selon l'une des revendications 1 à 13, dans lequel, le câble de puissance (40) comprend au moins quatre fils permettant ainsi de transférer des données électroniques et un courant électrique entre le module batterie (30) et un élément déporté tel que le disque de détection (203).

15. Détecteur de métaux portatif (200) selon l'une des revendications 1 à 14, dans lequel, le bras (24) est tubulaire et comprend une section transversale de forme déterminée, le bras (24) comprend donc une cavité longitudinale (240) dans laquelle s'étend le câble de puissance (40).

## Patentansprüche

1. Tragbarer Metalldetektor (200), der einen Stab umfasst, der eine Detektionsscheibe (203) trägt, die mit einer oder mehreren Spulen ausgestattet ist, wobei der Stab Folgendes umfasst:
- einen Arm (24), der sich entlang einer Längsachse A-A erstreckt und ein Gehäuse beinhaltet, das durch eine Innenwand (241) begrenzt wird
- ein Batteriemodul (30), das in das Gehäuse eingesetzt ist, wobei das Batteriemodul (30) einen seitlichen Verbinder (31) beinhaltet,
- ein Leistungskabel (40), das dazu ausgelegt ist, einen elektrischen Strom zu übertragen, wobei das Leistungskabel (40) zum einen ein erstes Ende, das einen Verbindungskopf (41) beinhaltet, der komplementär zu dem seitlichen Verbinder (31) ist, und zum anderen ein zweites Ende, das elektrisch mit der Detektionsscheibe verbunden ist und dazu ausgelegt ist, einen Ausgangsstrom bereitzustellen, umfasst;
wobei der Verbindungskopf (41) des Kabels (40) in Kontakt mit dem seitlichen Verbinder (31) platziert ist, wobei das Batteriemodul (30) auf die Abmessungen des Gehäuses abgestimmt ist, so dass die Innenwand (241) des Arms (24) den Verbindungskopf (41) in Kontakt mit dem seitlichen Verbinder (31) hält.

2. Tragbarer Metalldetektor (200) nach Anspruch 1, wobei das Batteriemodul (30) lösbar in das Gehäuse eingesetzt ist, wobei der Metalldetektor (200) vorzugsweise ein Ausziehelement (43) für das Batteriemodul (30) umfasst, wobei das Ausziehelement (43) zum einen direkt oder indirekt mit dem Batteriemodul (30) gekoppelt ist und zum anderen von dem Gehäuse des Arms (24) abragt.

3. Tragbarer Metalldetektor (200) nach einem der Ansprüche 1 und 2, wobei das Batteriemodul drahtgebundene oder drahtlose Mittel zum Wiederaufladen der Batterie beinhaltet, wobei die Mittel zum Wiederaufladen der Batterie insbesondere einen Endverbinder (32) beinhalten, der an einem Ende des Gehäuses des Arms (24) positioniert ist, wobei der Endverbinder (32) vorzugsweise von dem Ende des Gehäuses abragt.

4. Tragbarer Metalldetektor (200) nach einem der Ansprüche 1 bis 3, wobei das Gehäuse an einem Ende (21) des Arms (24) angeordnet ist, wobei das Verbindungsendstück (37) eine Schulter (370) umfasst, die dazu ausgestaltet ist, an mindestens einem Abschnitt der freien Ränder (210) des Endes (21) des Arms (24) anzuliegen, wobei der Arm (24) des Stabs (20) insbesondere ein Staboberteil (201) und ein Stabunterteil (20) beinhaltet, die zusammengebaut sind, wobei das Staboberteil mit dem Handgriff (204) gekoppelt ist, während das Stabunterteil (20) an die Detektionsscheibe (203) angelenkt ist, wobei das Gehäuse an dem Ende (21) des Stabunterteils (20) angeordnet ist, das mit dem Staboberteil (201) zusammengebaut ist.

5. Tragbarer Metalldetektor (200) nach einem der Ansprüche 1 bis 4, wobei der seitliche Verbinder (31) eine Verbindungsschnittstelle beinhaltet, die entlang einer Verbindungsachse B-B ausgerichtet ist, die einen Winkel α zwischen 25° und 90° in Bezug auf die Längsachse A-A bildet.

6. Tragbarer Metalldetektor (200) nach einem der Ansprüche 1 bis 5, wobei das Batteriemodul (30) einen seitlichen Verbindungsabschnitt (38) umfasst, dessen Querschnitt in Bezug auf den Abschnitt, der die Batterie (34) enthält, maßreduziert ist, wobei der Verbindungsabschnitt (38) den seitlichen Verbinder (31) beinhaltet.

7. Tragbarer Metalldetektor (200) nach einem der Ansprüche 1 bis 6, wobei das Batteriemodul (30) eine Haltenut (39) beinhaltet, die es ermöglicht, den Verbindungskopf (41) des seitlichen Verbinders (31) koaxial zu halten.

8. Tragbarer Metalldetektor (200) nach einem der Ansprüche 1 bis 7, wobei das Batteriemodul (30) eine Aussparung (312) beinhaltet, die den seitlichen Verbinder (31) umfasst, wobei die Aussparung (312) komplementär zu dem Verbindungskopf (41) des Leistungskabels (40) ist.

9. Tragbarer Metalldetektor (200) nach einem der Ansprüche 1 bis 8, wobei der seitliche Verbinder (31) Folgendes beinhaltet:
- eine elektrische Kontaktanordnung (310), die direkt oder indirekt mit der Batterie (34) verbunden ist, und
- eine elektronische Kontaktanordnung (311), die mit elektronischen Mitteln verbunden ist, die in das Batteriemodul (30) integriert sind, wobei die elektronischen Mittel vorzugsweise dazu ausgestaltet sind, den Wert der Spannung im Ausgang der Batterie (34) zu modulieren;
wobei die elektronischen Mittel insbesondere dazu ausgelegt sind, über die elektronische Kontaktanordnung (311) und das Leistungskabel (40) mit abgesetzten elektronischen Bauteilen, beispielsweise mit in einer Detektionsscheibe (203) angeordneten elektronischen Bauteilen, zu kommunizieren.

10. Tragbarer Metalldetektor (200) nach Anspruch 1 bis 9, wobei der Verbindungskopf (41) einen Haltekörper (414) beinhaltet, der dazu ausgestaltet ist, den Verbindungskopf (41) koaxial zu dem seitlichen Verbinder (31) zu halten.

11. Tragbarer Metalldetektor (200) nach den Ansprüchen 7 und 10, wobei der Haltekörper (414) dazu ausgestaltet ist, mit der Haltenut (39) des Batteriemoduls (30) zusammenzuwirken, wobei der Verbindungskopf (41) vorzugsweise ein von dem Haltekörper (414) abragendes Verbindungsendstück (412) beinhaltet, wobei das Verbindungsendstück (412) komplementär zu dem seitlichen Verbinder (31) ist.

12. Tragbarer Metalldetektor (200) nach Anspruch 2, wobei das Ausziehelement (43) mit dem Verbindungskopf (41) gekoppelt ist und sich längs in der Verlängerung des Verbindungskopfes (41) erstreckt.

13. Tragbarer Metalldetektor (200) nach einem der Ansprüche 1 bis 12, wobei sich das Leistungskabel (40) zwischen dem Gehäuse und dem Kopplungsende (22) erstreckt, an dem das zweite Ende des Kabels (40) aus dem Arm (24) austritt, um direkt oder indirekt mit den Anschlüssen einer oder mehrerer Spulen, die in der Detektionsscheibe (203) angeordnet sind, verbunden zu werden.

14. Tragbarer Metalldetektor (200) nach einem der Ansprüche 1 bis 13, wobei das Leistungskabel (40) mindestens vier Adern umfasst, die es somit ermöglichen, elektronische Daten und einen elektrischen Strom zwischen dem Batteriemodul (30) und einem abgesetzten Element wie etwa der Detektionsscheibe (203) zu übertragen.

15. Tragbarer Metalldetektor (200) nach einem der Ansprüche 1 bis 14, wobei der Arm (24) rohrförmig ist und einen Querschnitt von bestimmter Form umfasst, wobei der Arm (24) daher eine Längskavität (240) umfasst, in der sich das Leistungskabel (40) erstreckt.

## Claims

1. Portable metal detector (200) comprising a cane carrying a detection disc (203) equipped with one or more coils, the cane comprising:
- an arm (24) extending along a longitudinal axis A-A and comprising a housing delimited by an inner wall (241);
- a battery module (30) inserted into the housing, the battery module (30) comprising a side connector (31), and
- a power cable (40) adapted to transmit an electric current, the power cable (40) comprising, on the one hand, a first end which has a connection head (41) complementary to the side connector (31), and on the other hand, a second end electrically connected to the detection disc and adapted to supply an outgoing current; the connection head (41) of said cable (40) being placed in contact with the side connector (31), the battery module (30) being adjusted to the dimensions of the housing so that the inner wall (241) of the arm (24) keeps the connection head (41) in contact with the side connector (31).

2. Portable metal detector (200) according to Claim 1, wherein the battery module (30) is removably inserted into the housing, preferably the metal detector (200) comprises an extraction element (43) for extracting the battery module (30), the extraction element (43) being, on the one hand, coupled directly or indirectly to the battery module (30) and, on the other hand, protruding from the housing of the arm (24).

3. Portable metal detector (200) according to either of Claims 1 and 2, wherein the battery module comprises means for wired or wireless charging of the battery, in particular, the battery charging means comprise an end connector (32) which is positioned at one end of the housing of the arm (24), preferably the end connector (32) protrudes from the end of the housing.

4. Portable metal detector (200) according to one of Claims 1 to 3, wherein the housing is arranged at one end (21) of the arm (24), the connection end piece (37) comprises a shoulder (370) configured to bear against at least one portion of the free edges (210) of the end (21) of the arm (24), in particular, the arm (24) of the cane (20) comprising an upper part (201) and a lower part (20) of the cane which are assembled, the upper part being coupled to the handle (204) while the lower part (20) of the cane is articulated to the detection disc (203), the housing being arranged at the end (21) of the lower part (20) which is assembled to the upper part (201).

5. Portable metal detector (200) according to one of Claims 1 to 4, wherein the side connector (31) comprises a connection interface that is oriented along a connection axis B-B forming an angle α of between 25° and 90° with respect to the longitudinal axis A-A.

6. Portable metal detector (200) according to one of Claims 1 to 5, wherein the battery module (30) comprises comprise a side connection portion (38) whose cross section is smaller than the portion containing the battery (34), the connection portion (38) incorporating the side connector (31).

7. Portable metal detector (200) according to one of Claims 1 to 6, wherein the battery module (30) has a retaining groove (39) making it possible to hold the connection head (41) coaxially with the side connector (31) .

8. Portable metal detector (200) according to one of Claims 1 to 7, wherein the battery module (30) has a recess (312) which includes the side connector (31), the recess (312) being complementary to the connection head (41) of the power cable (40).

9. Portable metal detector (200) according to one of Claims 1 to 8, wherein the side connector (31) comprises:
- an electrical pin configuration (310) connected directly or indirectly to the battery (34), and
- an electronic pin configuration (311) connected to electronic means integrated into the battery module (30), preferably the electronic means are configured to modulate the value of the voltage output from the battery (34);
the electronic means being in particular adapted to communicate, through the electronic pin configuration (311) and the power cable (40), with remote electronic components, for example with electronic components arranged in a detection disc (203).

10. Portable metal detector (200) according to Claim 1 to 9, wherein the connection head (41) includes a retaining body (414) configured to hold the connection head (41) coaxially with the side connector (31).

11. Portable metal detector (200) according to Claims 7 and 10, wherein the retaining body (414) is configured to cooperate with the retaining groove (39) of the battery module (30), preferably, the connection head (41) has a connection end piece (412) projecting from the retaining body (414), the connection end piece (412) being complementary to the side connector (31).

12. Portable metal detector (200) according to Claim 2, wherein the extraction element (43) is coupled to the connection head (41) and extends longitudinally in the extension of the connection head (41).

13. Portable metal detector (200) according to one of Claims 1 to 12, wherein the power cable (40) extends between the housing and the coupling end (22) at which the second end of said cable (40) exits the arm (24) for connection directly or indirectly to the terminals of one or more coils arranged in the detection disc (203).

14. Portable metal detector (200) according to one of Claims 1 to 13, wherein the power cable (40) includes at least four wires for transferring electronic data and electrical current between the battery module (30) and a remote element such as the detection disc (203).

15. Portable metal detector (200) according to one of Claims 1 to 14, wherein the arm (24) is tubular and has a cross section of predetermined shape, and the arm (24) therefore comprises a longitudinal cavity (240) in which the power cable (40) extends.
